Europäisches Patentamt

(19) European Patent Office

Office européen des brevets

(11) **EP 0 603 249 B1**

(12) **EUROPEAN PATENT SPECIFICATION**

(45) Date of publication and mention
of the grant of the patent:
**24.06.1998 Bulletin 1998/26**

(21) Application number: **92919096.5**

(22) Date of filing: **07.09.1992**

(51) Int. Cl.$^6$: **B32B 27/18**, B32B 27/20,
B32B 27/32

(86) International application number:
**PCT/EP92/02074**

(87) International publication number:
**WO 93/04860 (18.03.1993 Gazette 1993/08)**

(54) **MULTI-LAYER OPAQUE FILM STRUCTURES OF REDUCED SURFACE FRICTION AND PROCESS FOR PRODUCING SAME**

MEHRSCHICHTIGE TRÜBE FILMSTRUKTUREN MIT VERRINGERTER OBERFLÄCHENREIBUNG SOWIE VERFAHREN ZUR HERSTELLUNG

STRUCTURES DE FEUILLE MULTICOUCHE OPAQUE A FRICTION SUPERFICIELLE REDUITE, ET LEUR PROCEDE DE PRODUCTION

(84) Designated Contracting States:
**AT BE CH DE DK ES FR GB GR IE IT LI LU NL SE**

(30) Priority: **09.09.1991 US 756416**
**09.09.1991 US 756638**

(43) Date of publication of application:
**29.06.1994 Bulletin 1994/26**

(60) Divisional application:
**97121086.9 / 0 835 751**

(73) Proprietor:
**MOBIL OIL CORPORATION**
**Fairfax, Virginia 22037-0001 (US)**

(72) Inventors:
• **FROGNET, Jean-Pierre**
**B-6760 Virton (BE)**

• **KELLER, Lajos, Edward**
**Fairport New York 14450 (US)**
• **PETITJEAN, Maurice**
**F-08110 Villiers (FR)**

(74) Representative:
**Lawrence, Peter Robin Broughton et al**
**GILL JENNINGS & EVERY,**
**Broadgate House,**
**7 Eldon Street**
**London EC2M 7LH (GB)**

(56) References cited:
**EP-A- 0 224 862**          **EP-A- 0 258 020**
**WO-A-89/08023**           **US-A- 4 419 410**
**US-A- 4 582 752**          **US-A- 5 091 236**

## Description

In the packaging of certain types of foods (for example, snack foods such as potato chips and cookies) it is common practice to employ a multi-layer film. A desirable property in such a packaging film is an opacity which protects the packaged product from deterioration caused by exposure to light. It has been found that certain wavelengths of light up to about 450 nm cause increased spoilage in such packaged products. Even when a degree of opacity is present in the film, spoilage occurs if the film allows passage of some light.

It is known in the art that thermoplastic polymers can be loaded with opacifying fillers; cast into films; and thereafter stretched to form oriented thermoplastic films.

It is also known that polymeric film structures comprising a cavitated core containing numerous voids provide a much higher degree of opacity, possibly due to the effects of light scattering, than is possible from the use of opacifying fillers alone; and that such film structures may be used in food packaging.

WO 89/08023 discloses an opaque, biaxially-oriented polymeric film containing a matrix of (i) a thermoplastic polymeric material in which there are dispersed (ii) void-initiating solid particles, about which there are located opacifying voids, and a minor amount of (iii) a light-absorbing pigment particles having lamellar morphology.

Despite significant advances in the art, many films prove to be somewhat fragile in certain end-use applications. While highly cavitated or voided films are ideally suited for certain applications such as overwrapping biscuits, in other applications such as those employing Vertical Form Fill and Seal (VFFS) packaging machinery, as well as some which employ Horizontal Form Fill and Seal (HFFS) machinery, the forming collars of the machine often damage or shear the packaging being formed and filled. In addition, films converted into packages which are filled with both product and air, so as to provide an air cushion for product protection, often benefit from the use of a less fragile film. However certain means employed to provide a less fragile voided film can reduce the film's pleasing aesthetic appearance or may change the ability of the film to inhibit the transmission of light therethrough.

Therefore, what is needed is a less fragile, opaque film structure which provides an improved range of process operability, while maintaining its appearance, strength and stiffness. This invention seeks to provide such a film.

According to the present invention, there is provided an opaque, biaxially oriented, polymeric film structure which comprises at least three layers, there being :

(a) a voided core layer comprising a matrix of (i) a thermoplastic polymeric material in which are dispersed (ii) void-initiating solid particles which are phase-distinct from the thermoplastic polymeric material of the matrix and about which particles are located opacifying voids;
(b) a non-voided layer comprising a thermoplastic polymeric material, adherent to one side of the core layer (a), which comprises a migratory slip agent and a migratory antistatic agent;
(c) a skin layer comprising a thermoplastic polymeric material and adherent to intermediate layer b), the skin layer being thick enough to prevent the asperities of the core layer from being manifest.

Layer (a) may suitably comprise a light absorbing lamellar pigment.

The film structure of the present invention is an an opaque, biaxially oriented polymeric film structure of reduced surface coefficient of friction. The film structure includes: (a) a thermoplastic polymer matrix core layer having a first surface and a second surface, within which is located a strata of voids; positioned at least substantially within a substantial number of the voids is at least one spherical void-initiating particle which is phase distinct and incompatible with the matrix material, the void space occupied by the particle being substantially less than the volume of the void, with one generally cross-sectional dimension of the particle at least approximating a corresponding cross-sectional dimension of the void; the population of the voids in the core being such as to cause a significant degree of opacity; (b) at least one thermoplastic polymer intermediate layer having a first surface and a second surface, the second surface of the intermediate layer adhering to at least the first surface of the core layer, the intermediate layer formed from a mixture comprising the thermoplastic polymer, a migratory slip agent and a migratory antistatic agent; and (c) a non-voided thermoplastic skin layer adhering to the first surface of the intermediate layer, the void-free skin layer and the intermediate layer together being of a thickness such that the outer surface of the skin core layer does not, at least substantially, manifest the surface irregularities of the matrix core layer; wherein the slip agent and the antistatic agent migrate to the outer surface of the skin layer and are effective to reduce the surface coefficient of friction thereof.

More preferred is a five-layer film structure, incorporating the above-described (a), (b) and (c) layers, and further including (b') a second non-voided layer comprising a thermoplastic polymer material having a first surface and a second surface, the second surface of the second intermediate layer adhering to the second surface of the core layer, the second non-voided layer comprising up to 12 percent by weight of titanium oxide and suitably containing a migratory slip agent and a migratory antistatic agent; and (c') a second non-voided thermoplastic skin layer adhering to the first surface of the intermediate layer, the second void-free skin layer being of a thickness such that the outer surface of the skin core layer does not, at least substantially, manifest the surface irregularities of the matrix core layer wherein the slip agent and the antistatic agent migrate to the outer surfaces of each skin layer and are effective to reduce the surface coefficient of friction of each surface. Skin layer (c') is preferably free from titanium dioxide. It is also found that layers (b') or (c') can be as defined for layers (b) or (c), respectively.

In either embodiment, the skin layers (c) and/or (c') can be simple, economical thin encapsulating layers or they can be more elaborate heat sealable layers.

Also provided is a process for preparing an opaque, biaxially oriented polymeric film structure, comprising the steps of: (a) mixing a major proportion of a first thermoplastic polymeric material with a minor proportion of a first material of higher melting point or having a higher glass transition temperature than the first thermoplastic polymeric material to produce a core layer mixture; (b) heating the core layer mixture produced in step (a) to a temperature of at least above the melting point of the first thermoplastic polymeric material; (c) dispersing the first material of higher melting point or higher glass transition temperature of the mixture produced in step (a) uniformly throughout the molten first thermoplastic polymeric material in the form of microspheres; (d) mixing a second thermoplastic polymeric material with a migratory slip agent and a migratory antistatic agent to produce an intermediate layer mixture; (e) heating the intermediate layer mixture produced in step (d) to a temperature of about the melting point of the second thermoplastic polymeric material; (f) producing a thermoplastic skin layer mixture; (g) forming a biaxially oriented coextruded film structure from the core layer mixture, the intermediate layer mixture and the skin layer mixture, the forming step conducted at a temperature and to a degree to form a strata of opacifying voids within the core layer; wherein the thermoplastic skin layer in combination with the intermediate layer are of a thickness such that the outer surface of the matrix core layer does not, at least substantially, manifest surface irregularities of the matrix core layer; and (h) aging the film structure produced in step (g) for a period of time sufficient to permit the migration of an effective amount of the migratory slip agent and the migratory antistatic agent so that surface coefficient of friction is reduced.

In the drawings:

Fig. 1 is a schematic diagram of a method for determining percent light transmission.

Fig. 2 is a schematic diagram of a method for determining percent opacity.

In order to achieve the unique film structure of the present invention, it is important that a particular thickness relationship exist between the thickness dimension of the core and the thickness of the skin layers. It is preferred that the core thickness be from 60 to 95% of the overall structure with about 65-90% preferred. This in combination with the population and configuration of the voids in a total structure at least about 25.4 µm (1.0 mil) thick, will materially contribute to the overall degree of opacity of the structure. Likewise, by maintaining the thickness of the skin layers within particular ranges in relation to the overall structure and to the thickness of the core layer, the overall combination results in unique advantages. Intermediate layer (b), adhering to the first surface of core layer (a) and, when present, intermediate layer (b') adhering to the second surface of core layer (a) each have a thickness of from 5 to 30% of the overall structure, with a thickness of 5 to 15% preferred. Intermediate layer (b) and, when present, (b') are formed from a thermoplastic polymer; (b) does include and (b') may include a migratory slip agent and migratory antistatic agent, as will be described in more detail hereinbelow. Once the multi-layer structure of the present invention is formed, the slip and antistatic agents migrate to the outer surface of skin layer (c) and, if present in (b') to (c') to reduce the surface coefficients of friction thereof. The intermediate layer serves an important function in reducing water vapor transmission rate (WVTR) and may also contain $TiO_2$ as a contact whitening agent. Skin layers (c) and (c'), which, when present, are preferably $TiO_2$-free, adhering to the surfaces of the intermediate layers not in contact with the core layer, have thicknesses from 0.10% to 5.0% of the overall structure with thicknesses from 0.20% to 3.0% preferred. The relative thinness of this layer adds to economy in production especially when the layer is an expensive heat-sealable material. A preferred five-layer structure might include, for example, a core layer with a thickness of about 79% of the overall structure with intermediate layer (b) and (b') having thicknesses of about 8% each and skin layers (c) and (c') having thicknesses of about 2.5% each.

The core is a thermoplastic polymer matrix material within which is located strata of voids. From this it is to be understood that the voids create the matrix configuration.

The films of the present invention have high opacity and low light transmission. A distinction should be made between opacity and light transmission. Opacity is the opposite of transparency and is a function of the scattering and reflection of light transmitted through the film. Opacity is the ability, for example, to block out writing below it. Light transmission is a function of light passing more directly through the film.

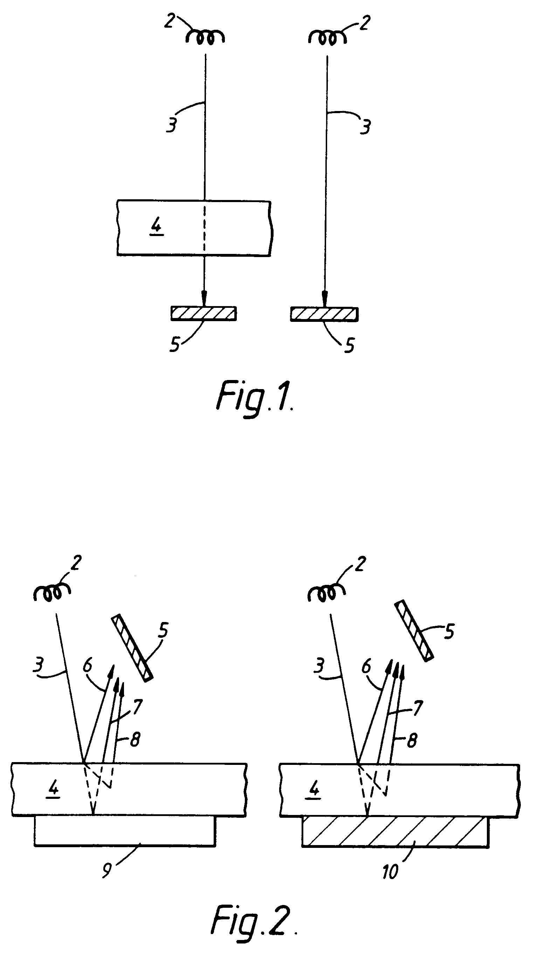

Referring now to Figure 1, the percent light transmission through a film is determined by using light source 2 to transmit light rays 3 directly through film 4 and measuring at light sensor 5, value $T_2$ which is the amount of light which is transmitted through film 4. The amount of light rays 3 which can be directly transmitted, value $T_1$, is determined by measuring the light 3 directly transmitted by light source 2 with no intervening film. The percent light transmission through the film can then be determined using the formula:

$$\% \text{ Light Transmission} = \frac{T_2}{T_1}$$

where: $T_2$ = light transmitted through a film; and $T_1$ = light directly transmitted.

Referring now to Figure 2, for a measure of percent opacity of a film, light source 2 transmits light through film 4 onto a white surface 9 and the same procedure used to project light onto a black surface 10. With both white and black surfaces, measurement at light sensor 5 is of all of the following: light reflected off the upper surface of the film 6; light transmitted through the film and reflected by the white or black surfaces 7 on the side of the film opposite from the light source; and, light scattered by the film 8.

The percent opacity of the film can then be determined using the formula:

$$\% \text{ Opacity} = 100 \times \frac{R_B}{R_W}$$

where: $R_W$ = Reflected light + scattered light + light transmitted through the film and reflected off a white surface; and $R_B$ = Reflected light + scattered light + light transmitted through the film and reflected off a black surface.

Accordingly, a highly reflective film may provide high opacity while allowing light transmission. This is because percent light transmission is not the equivalent of percent opacity. Light transmission is the amount of light passing directly through the film. To prevent food spoilage decreased light transmission is desirable.

In forming the core layer, as in U. S. Patent No. 4,377,616, a master batch technique can be employed by either in the case of forming the void initiating particles in situ or in adding preformed spheres to a molten thermoplastic matrix material. After the formation of a master batch, appropriate dilution of the system can be made by adding additional thermoplastic matrix material until the desired proportions are obtained. However, the components may also be directly mixed and extruded instead of utilizing a master batch method.

The void-initiating particles which are added as filler to the polymer matrix material of the core layer can be any suitable organic or inorganic material which is compatible with the core material at the temperature of biaxial orientation such as polybutylene terephthalate, nylon, solid or hollow preformed glass spheres, metal beads or spheres, ceramic spheres and calcium carbonate.

The polyolefin contemplated as the core material includes polypropylene, polyethylene, polybutene and copolymers and blends thereof. Particularly preferred is an isotactic polypropylene containing at least about 80% by weight of isotactic polypropylene. It is also preferred that the polypropylene have a melt flow index of from about 2 to 10 g/10 min.

It is preferred that the average diameter of the void-initiating particles be from 0.1 to 10 $\mu$m. These particles may be of any desired shape although it is preferred that they be substantially spherical in shape. This does not mean that every void is the same size. It means that, generally speaking, each void tends to be of like shape when like particles are used even though they vary in dimensions. These voids may assume a shape defined by two opposed and edge contacting concave disks.

As indicated above, the matrix polymer and the void initiating particle must be incompatible and this term is used in the sense that the materials are two distinct phases. The spherical void initiating particles constitute a dispersed phase throughout the lower melting polymer which polymer will, ultimately, upon orientation, become a void-filled matrix with the spherical particles positioned somewhere in the voids.

As a result of the biaxial orientation of the film structure herein, in addition to opacifying the core layer of the structure, the orientation improves other physical properties of the composite layers such as flex-crack resistance, Elmendorff tear strength, elongation, tensile strength, impact strength and cold strength properties. The resulting film can have, in addition to a rich high quality appearance and excellent opacifying characteristics, low water vapor transmission rate characteristics and low oxygen transmission rate characteristics. This makes the film ideally suited for packaging food products including liquids. The film also has attractive utility as a decorative wrap material.

It is believed that because of comparative sphericity of the void-initiating particles, the voids are closed cells. This means that there is virtually no path open from one side of the core the other throughout which liquid or gas can transverse.

The opacity and low light transmission of the film may be further enhance by the addition to the core layer of from about 1% by weight and up to about 10% by weight of opacifying compounds, which are added to the melt mixture of the core layer before extrusion. Opacifying compounds which may be used include iron oxides, carbon black, aluminum, $TiO_2$, and talc. The opacifying compounds do not contribute to void formation.

Preferred for use in the core layer are pigment particles of a lamellar morphology. The pigment particles of lamellar morphology (lamellar pigment) may comprise an organic pigment, preferably graphite, or an inorganic pigment, such as a silicate, preferably a silicate which has a pronounced tendency to cleave in one preferred planar direction, for example, a mica. Graphite is a particularly preferred lamellar pigment. The lamellar pigment should have an average particle size which, of itself, is insufficient to cause voiding of the matrix; this will depend on the nature of the matrix and the processing conditions, especially deformation temperature and the amount of the pigment in the matrix. The term "voiding of the matrix" as used herein designates creating a space within the matrix. However, good results are obtained when the lamellar pigment has an average particle size from 0.2 to 2.0 micrometers, preferably from 0.5 to 1.0 micrometers. The lamellar pigment may be present in an amount from 0.2 to 12 wt. %, suitably from 0.5 to 5.0 wt. % of the film, preferably from 1.0 to 2.0 wt. % of the film.

The polyolefin contemplated as the material for use in forming intermediate layers (b) and (b') includes polypropylene, polyethylene, polybutene and copolymers and blends thereof. As was the case for the core layer, particularly preferred is an isotactic polypropylene containing at least about 80% by weight of isotactic polypropylene. It is also preferred that the polypropylene have a melt flow index of from about 2 to 10 g/10m.

To achieve the desired characteristic of reduced coefficient of friction at the surface of the skin layer or layers, it has been discovered that the use of certain slip agents in conjunction with certain antistatic agents in the intermediate layer, when each such agent possesses migratory properties, will reduce the coefficient of friction at the surface of the skin layer or layers, when sufficient aging time is provided to permit the combination of agents to migrate to the outer surfaces of the film. By "migratory" is meant the property or trait of bleeding through the polymeric matrices of the intermediate and skin layers so at least an effective amount of the agents reside on the surface of the skin layer to reduce the surface coefficient of friction thereof.

While a variety of migratory antistatic agents are available commercially, preferred for use in the practice of the present invention is the group of ethoxylated amines and ethoxylated amides. Ethoxylated amines are available from the Humco Chemical Division of Whitco Chemical Corp. under the trademark of Kemamine, from the Noury Chemical Company under the trademark of Armostat and from other sources. Ethoxylated amides are available from Akzo Chemie America under the trademark of Ethmid, from the Oxynol Chemical Company under the trademark of Oxynol and from other sources. Particularly preferred for their migratory properties is the group of ethoxylated amines.

Likewise, a wide variety of migratory slip agents are available commercially, some of which are disclosed in U. S. Patent No. 4,510,281, the contents of which are hereby incorporated by reference for those details. Preferred for use in the practice of the present invention is the group of commercially available amine- and amide-based slip agents, with erucamide being most particularly preferred.

The range of antistatic agent levels useful in the practice of the present invention is from about 500 ppm to about 2000 ppm of the intermediate layer mixture when a film is produced according to the ratio of materials and layer thickness described herein, with about 1000 ppm to about 1500 ppm being particularly preferred. It is important to note that when the multi-layer films of the present invention are to come in contact with foods, governmental regulatory agencies generally limit the amount of additives materials which can be employed therein. For example, amine- and amide-based antistatic materials are limited to approximately 1200 ppm of the intermediate layer mixture when a film is produced according to the ratio of materials and layer thickness described herein. Nevertheless, this limitation does not inhibit the ability of the agent to cooperate with the migratory slip agent to yield the beneficial properties ascribed thereto. The range of slip agent levels useful in the practice of the present invention is from about 200 ppm to about 2000 ppm of the intermediate layer mixture when a film is produced according to the ratio of materials and layer thickness described herein, with about 800 ppm to about 1500 ppm being particularly preferred. For example, when seeking to form a 20.32 μm (0.8 mil) thickness multi-layer structure, in accordance with the present invention, about 1500 ppm of erucamide is required. When forming a 40.64 μm (1.6 mil) thickness structure, about 800 ppm of erucamide is required. Amine- and amide-based slip agents, such as the most particularly preferred agent, erucamide, are permitted by governmental regulatory agencies to be present at significantly higher levels than necessary to perform the function intended by the present invention.

It has been discovered that the combined use of a migratory antistatic agent with a migratory slip agent results in a synergistic reduction in the coefficient of friction. It is thought that this occurs due to the fact that a film having poor slip characteristics will tend to generate and store more static charges and a film having a high level of stored static charge will tend to cling more to any surface with which it comes in contact with, thus exhibiting a higher coefficient of friction.

Moreover, it has been discovered that the placement of the migratory slip agent and the migratory antistatic agent in the intermediate layers (b) and/or (b') produces a much higher level of effectiveness than can be achieved through their placement within the core layer (a) or the skin layers (c) and/or (c'). With regard to the placement of the agents in the core layer, this is due to the fact that the migratory slip agent and the migratory antistatic agent will tend to cling to the interior surfaces of the voids formed within the core layer. With regard to the placement of the agents in the skin layer or layers, it is the volatile nature of the agents themselves which tend to limit their effectiveness. As described herein, the temperatures required to form the multi-layer structures of the present invention will tend to "boil" away the agents, inhibiting their ability to function as intended.

The opacity, whiteness and low light transmission of the film may be further enhanced by the addition to intermediate layers (b) and (b') of TiO$_2$ in amount of from about 1% by weight and up to about 10% by weight, which is added to the melt mixture of the intermediate layer before extrusion. Preferably, the intermediate layers contain from about 2% by weight to 6% by weight of TiO$_2$. Additionally, the intermediate layers may also contain talc. The whiteness resulting from the inclusion of TiO$_2$ provides an excellent surface for graphics. Furthermore, the whiteness allows printing of laminated or unlaminated structures without requiring white ink.

Layers (c) and (c'), where present, are thin skin layers applied to the surfaces of intermediate layers (b) and, where present, (b') which are not in contact with the core layer (a). Layers (c) and (c') are preferably of a material having a low WVTR. This layer may consist of a propylene; high density polyethylene; linear low density polyethylene; block copolymer of ethylene and propylene; random copolymer of ethylene and propylene; other ethylene homopolymer, copolymer, terpolymer; or blends thereof. The homopolymer contemplated herein is formed by polymerizing the respective monomer.

This can be accomplished by bulk or solution polymerization, as those skilled in the art would plainly understand. One of the preferred materials for layers (c) and/or (c') is isotactic polypropylene. Skin layers (c) and (c') are of a thickness sufficient to encapsulate the intermediate layers, and, when TiO$_2$ is employed in intermediate layers (b) and (b'), the desired effect of reduced processing machinery wear problems associated with TiO$_2$-containing outer layers is achieved. Moreover, the combination of intermediate layer (b) and skin layer (c) and intermediate layer (b') and skin layer (c') provide a thickness such that the outer surface of each skin layer does not, at least substantially, manifest the surface irregularities of the matrix core layer (a).

The copolymer contemplated herein for skin layers (c) and/or (c') can be selected from those copolymers typically employed in the manufacture of multi-layered films. For example, a block copolymer of ethylene and propylene is formed by sequential polymerization of the respective monomers. The feeding of the monomers in forming a block copolymer is controlled so that the monomer employed in one stage of the sequential polymerization is not added until the monomer employed in the proceding stage has been at least substantially consumed thereby insuring that the concentration of the monomer remaining from the preceding stage is sufficiently low to prevent formation of an excessive proportion of random copolymer. Also, as indicated above, a random copolymer of ethylene and propylene can be advantageously employed to form skin layers (c) and/or (c'). The contemplated terpolymers which may be used for skin layers (c) and/or (c'), where present, are comparatively low stereoregular polymers. The terpolymers can have a melt flow rate at 230°C (446°F) ranging from 2 to 10 grams per 10 minutes and preferably from 4 to 6 grams per 10 minutes. The crystalline melting point can range from less than 121°C (250°F) to somewhat greater than 188°C (371°F). The terpolymers will predominate in propylene, and the ethylene and 1-butene monomers can be present in approximately from 0.3:1- 1:1 mole percentage in relation to each other.

If desired, the exposed surface of skin layers (c) and/or (c') can be treated in a known and conventional manner, for example, by corona discharge to improve its receptivity to printing inks and/or its suitability for such subsequent manufacturing operations as lamination.

The exposed treated or untreated surface of layers (c) and/or (c') may have applied to it, coating compositions or substrates such as another polymer film or laminate; a metal foil such as aluminum foil; cellulosic webs, for example, numerous varieties of paper such as corrugated paperboard, craft paper, glassine, cartonboard; nonwoven tissue, for example, spunbonded polyolefin fiber and melt-blown microfibers. The application may employ a suitable adhesive, for example, a hot melt adhesive such as low density polyethylene, ethylene-methacrylate copolymer, water-based adhesive such as polyvinylidene chloride latex.

Layers (c) and/or (c') may also include up to 1% by weight, with 500 ppm to 5000 ppm preferred and 1000 ppm most preferred, of inorganic particles, such as amorphous silica or talc to provide antiblock properties.

Skin layers (c) and/or (c') can also be fabricated from any of the heat sealable copolymers, blends of homopolymers and blends of copolymer(s) and homopolymer(s) heretofore employed for this purpose. Illustrative of heat sealable copolymers which can be used in the present invention are ethylene-propylene copolymers containing from 1.5 to 10, and preferably from 3 to 5 weight percent ethylene and ethylene- propylene-butene terpolymers containing from 1 to 10, and preferably from 2 to 6 weight percent ethylene and from 80 to 97, and preferably from 88 to 95 weight percent propylene. Heat sealable blends of homopolymer which can be utilized in providing layers (c) and/or (c) include from 1 to 99 weight percent polypropylene homopolymer, for example, one which is the same as, or different from, the polypropylene homopolymer constituting core layer (a) blended with from 99 to 1 weight percent of a linear low density polyethylene (LDPE). If layers (c) and/or (c') are heat-sealable, corona or flame treatment of layers (c) and/or (c') is not required.

Heat sealable blends of copolymer(s) and homopolymer(s) suitable for providing layers (c) and/or (c') include: a blend of from 5 to 19 weight percent of polybutylene and from 95 to 81 weight percent of a copolymer of propylene (80 to 95 mole percent) and butylene (20 to 5 mole percent); a blend of from 10 to 90 weight percent of polybutylene and from 90 to 10 weight percent of a copolymer of ethylene (2 to 49 mole percent) and a higher olefin having 4 or more carbon atoms (98 to 51 mole percent); a blend of from 10 to 90 weight percent polybutylene and from 90 to 10 weight percent of a copolymer of ethylene (10 to 97 mole percent) and propylene (90 to 3 mole percent); and, a blend of from 90 to 10 weight percent of polybutylene, and from 10 to 90 weight percent of a copolymer of propylene (2 to 79 mole percent) and butylene (98 to 21 mole percent).

If skin layers (c) and/or (c') are not heat sealable, and that property is desired on one or both of those surfaces, then a heat sealable layer (d) may be applied to one or both of those surfaces. Heat sealable layer (d) may be, for example, vinylidene chloride polymer or an acrylic polymer; or it may be coextruded from any of the heat sealable materials described herein. Vinylidene chloride polymer or acrylic polymer coatings are preferred materials which may be applied to the exposed exterior surfaces of the skin layers.

It is preferred that all layers of the multi-layer film structures of the present invention be coextruded. Thereafter, the film is biaxially oriented. For example, when employing polypropylene for the core matrix and the skin layers and employing PBT as the void initiating particles, a machine direction orientation may be from 4 to 8 and a transverse orientation may be from 4 to 10 times at a drawing temperature of 100°C to 170°C to yield a biaxially oriented film. A preferred film thickness is from 12.7 µm (0.5 mil) to 89 µm (3.5 mils).

Whiteness and opacity is created in the structures of the present invention by biaxially orienting first in the machine direction (MDO) and subsequently in the transverse direction (TDO). As indicated, in the orientation process the stretching force causes the thermoplastic polymer to part around the finely dispersed void-initiating particles and from oval shaped cavities or microvoids, supported by the particles. The whiteness and opacity of the resulting cavitated film depend on the following factors:

- Polymer volume, i.e., polygage
- Core and skin ratios
- Core composition
- The degree of cavitation as indicated by the film density g/cc as calculated by dividing the weight of one square meter by the optical gage (µ)

The higher the cavitation, that is the lower the film density, a whiter and more opaque film results; the lower the degree of cavitation, the lower the whiteness and opacity. Yet another way to increase the opacity of the cavitated film is to add pigment opacifiers such as iron oxide, and as is more preferred, by using a lamellar structure pigment, such as lamellar graphite.

As indicated, some applications, such as VFFS packaging machines and some HFFS packaging machines require higher density films that will pass over the forming collars of the machine without damage due to film crazing or shearing of the package. It has been discovered that this can be achieved by reducing the cavitation. To retain the film's pleasing aesthetic appearance, reducing the cavitation requires reducing the pigment volume as well, which results in loss of opacity and an increase of light transmission. Loss of whiteness producing cavitation can be offset by the use of $TiO_2$ in the intermediate and/or skin layers of the structure each comprising 10% by weight of the total structure.

As indicated above, films which employ titanium dioxide-whitened outer skin layers do provide certain desirable benefits, particularly from an appearance standpoint. However, such films can also yield certain undesirable characteristics. These undesirable characteristics stem from the fact that titanium dioxide ($TiO_2$) is quite abrasive and, in fact, possess a hardness greater than even the chrome plating found on gravure rolls. This can result in excessive wear of expensive printing and coating gravure roll surfaces, as well as any other surface which is contacted by such a film. Other problems which arise from the use of $TiO_2$ in the outer skin layers of such films is that fine deposits are laid on converting machinery, extruder die lips, treater bar exhausts, etc. Also, appearance problems caused by streaks on the film, slippage on stretching either by roll or tentering can result. The films produced in accordance with the present invention avoid the problems of films having titanium dioxide-whitened outer skin layers through the encapsulation of a titanium dioxide-whitened intermediate layer with a thin, titanium dioxide-free, non-voided thermoplastic skin layer.

The following Examples illustrates the invention.

COMPARATIVE EXAMPLE 1

A mixture of 92 percent by weight isotactic polypropylene (MP = 160°C (320°F), melt index = 3), containing 8 percent by weight PBT (MP = 227°C (440°F)) as the core layer void-initiating material, is melted in an extruder with a screw of L/D ratio of 20/1 to provide the core layer mixture. A second and third extruder, in association with the first extruder, are each supplied with the same isotactic polypropylene (without PBT) as the first extruder, but each containing titanium dioxide particles at 4 percent by weight. The titanium dioxide particles are employed as a contact whitener for this intermediate layer mixture. A fourth extruder, in association with the first three extruders, is supplied with the same isotactic polypropylene/titanium dioxide as the second extruder, this extruder being used to provide the skin layer mixture. A melt coextrusion is carried out while maintaining the cylinder of the core polymer material at a temperature sufficient to melt the polymer mixture, i.e., from 232°C (450°F) to 288°C (550°F). The polypropylene mixture of the second and third extruders to be extruded as intermediate layers is maintained at about the same temperature as the polypropylene used

7

EP 0 603 249 B1

in fabricating the core layer, as is the mixture being used to form the skin layers. The mixture of the fourth extruder is split into two streams to enable the formation of skin layers on each surface of the intermediate layers. A five-layer film laminate was coextruded with a core thickness representing about 80 percent of the overall extruded thickness, with the thicknesses of the intermediate layers representing about 16 percent and the skin layers representing about 4 percent of the film thickness. The unoriented film measured about 1000 μm (40 mils) in thickness. The resultant film was subsequently oriented eight by five and one-half times using a commercially available sequential biaxially orienting apparatus to provide a multi-layer film structure. The machine direction (MD) orientation is conducted at about 141°C (285°F) and the transverse direction (TD) orientation is conducted at about 149°C (300°F). The resultant 33 μm (1.3 mil) multilayer film exhibits a lustrous appearance.

COMPARATIVE EXAMPLE 2

The film composition, and its production, was as in Comparative Example 1 except that the skin layer mixture did not contain titanium dioxide.

A five-layer film laminate was coextruded with a core thickness representing about 80 percent of the overall extruded thickness, with the thickness of the intermediate layers representing about 16 percent and the skin layers representing about 4 percent of the film thickness. The unoriented film measured about 1000 μm (40 mils) in thickness. As in Example 1, the resultant film was oriented eight by five and one-half times using a commercially available sequential biaxially orienting apparatus to provide a multi-layer film structure. The machine direction (MD) orientation is conducted at about 141°C (285°F) and the transverse direction (TD) orientation is conducted at about 149°C (300°F).

The resultant 33 μm (1.3 mil) multi-layer film exhibits a smooth and lustrous appearance.

COMPARATIVE EXAMPLE 3

The film composition, and its production, was as in Comparative Example 2 except that the skin layer mixture contained 1000 ppm amorphous silica.

COMPARATIVE EXAMPLE 4

The films composition, and its production, was an in Comparative Example 3 except that the skin layer mixture polymer was an ethylene, 1-butene, polypropylene terpolymer.

EXAMPLE 5

A mixture of 90 percent by weight isotactic polypropylene (MP = 160°C (320°F.), melt index = 3), containing 8 percent by weight PBT (MP = 227°C (440°F.)) as the core layer void-initiating material and 2 percent by weight lamellar graphite, is melted in an extruder with a screw of L/D ratio of 20/1 to provide the core layer mixture. The lamellar graphite was employed for its beneficial effect on reduced light transmission and overall film appearance and has not effect on the coefficient of friction of the outer surface of the skin layers of the resultant film. A second and third extruder, in association with the first extruder, are each supplied with the same isotactic polypropylene (without PBT or graphite) as the first extruder, but each containing titanium dioxide particles at 4 percent by weight, about 1200 ppm of Armostat 410 (trade mark), an amine-based antistatic material; and about 1200 ppm of erucamide, by weight. The titanium dioxide particles are employed as a contact whitener for this intermediate layer mixture. A fourth extruder, in association with the first three extruders, is supplied with the same isotactic polypropylene as the second extruder but without titanium dioxide particles, Armostat 410, or erucamide, this extruder being used to provide the skin layer mixture. A melt coextrusion is carried out while maintaining the cylinder of the core polymer material at a temperature sufficient to melt the polymer mixture, i.e., from 232°C (450°F.) to 288°C (550°F). The polypropylene mixture of the second and third extruders to be extruded as intermediate layers is maintained at about the same temperature as the polypropylene used in fabricating the core layer, as is the mixture being used to form the skin layers. The mixture of the fourth extruder is split into two streams to enable the formation of skin layers on each surface of the intermediate layers. A five-layer film laminate was coextruded with a core thickness representing about 75 percent of the overall extruded thickness, with the thickness of the intermediate layers representing about 20 percent and the skin layers representing about 5 percent of the film thickness. The unoriented film measured about 1000 μm (40 mils) in thickess.

The resultant film was subsequently oriented eight by five and one-half times using a commercially available sequential biaxially orienting apparatus to provide a multi-layer film structure. The machine direction (MD) orientation is conducted at about 141°C (285°F.) and the transverse direction (TD) orientation is conducted at about 149°C (300°F). The resultant 30.5 μm (1.2 mil) multi-layer film exhibits a lustrous appearance.

The films produced in the five Examples were tested. Light transmission, gloss, coefficient of friction (COF), optical

8

thickness and film density were measured. Results obtained are presented in TABLE 1, below.

TABLE 1

| Ex. No. | Unit Weight (g/m²) μm | Optical Thick. (mils) | Light Transmission, % | Gloss % | Coef. of Frict. |
|---|---|---|---|---|---|
| 1 | 20.62 32 | (1.26) | 22.8 | 69 | 0.46 |
| 2 | 20.82 33 | (1.30) | 20.6 | 82 | 0.80 |
| 3 | 20.51 32 | (1.26) | 21.6 | 79 | 0.60 |
| 4 | 19.61 32 | (1.26) | 20.8 | 74 | 0.80 |
| 5 | 21.30 29.9 | (1.18) | 4.0 | 70 | 0.35 |

It will be observed that the film produced in accordance with the present invention exhibits the lightly desirable property of reduced surface coefficient of friction, even lower than a film having $TiO_2$-containing skin layers and greatly reduced light transmission.

COMPARATIVE EXAMPLE 6

A mixture of 92 percent by weight isotactic polypropylene (MP = 160°C (320°F.), melt index = 3), containing 8 percent by weight PBT (MP = 227°C (440°F.)) as the core layer void-initiating material, is melted in an extruder with a screw of L/D ratio of 20/1 to provide the core layer mixture. A second extruder, in association with the first extruder, is supplied with the same isotactic polypropylene (without PBT) as the first extruder, this extruder used to provide the skin layer mixture. A melt coextrusion is carried out while maintaining the cylinder of the core polymer material at a temperature sufficient to melt the polymer mixture, i.e., from 232°C (450°F.) to 288°C (550°F). The polypropylene mixture of the second extruder to be used to from the skin layers is maintained at about the same temperature as the polypropylene used in fabricating the core layer. The mixture of the second extruder is split into two streams to enable the formation of skin layers on each surface of the core layer.

A three-layer film laminate wad coextruded with a core thickness representing about 80 percent of the overall extruded thickness, with the thicknesses of the skin layers representing about 20 percent of the film thickness. The resultant film was subsequently oriented eight by five and three-quarter times using a commercially available sequential biaxially orienting apparatus to provide a multi-layer film structure. The machine direction (MD) orientation is conducted at about 141°C (285°F.) and the transverse direction (TD) orientation is conducted at about 149°C (300°F). The resultant multi-layer film exhibits a lustrous, white appearance and the following properties.

Optical gage (measured through microscope  : 33μm
Poly gage (Polypropylene equivalent)        : 22.4μm
Density                                      : 0.62 g/cc
Light transmission                           : 22%

The degree of cavitation is indicated by film density, in g/cc, as calculated by dividing the weight of one square meter of film by the optical gage (μm).

EXAMPLE 7

This Example demonstrates that the use of a migratory slip agent and a migratory antistatic agent in the intermediate layer blend reduces surface coefficient of friction characteristics.

The film composition, and its production, was as in Example 5 except that the skin layer mixture was an ethylene, 1-butene, propylene terpolymer together with 1500 ppm of a finely divided silica antiblock agent.

A five-layer film laminate was coextruded with a core thickness representing about 75 percent of the overall extruded thickness, with the thickness of the intermediate layers representing about 20 percent and the skin layers representing about 5 percent of the film thickness. The resultant film was subsequently oriented eight by four and three-quarter times using a commercially available sequential biaxially orienting apparatus to provide a multi-layer film structure. The machine direction (MD) orientation is conducted at about 146°C (295°F.) and the transverse direction (TD) orientation is conducted at about 149°C (300°F). The resultant multi-layer film exhibits the same appearance as the film of Example 12, with the following properties.

| | |
|---|---|
| Optical gage | : 30μm |
| Polygage | : 23μm |
| Density | : 0.71 g/cc |
| Light transmission | : 4.0% |
| Coefficient of friction | : 0.35* |

EXAMPLE 8

This Example demonstrates that effect of an increase in film thickness on the properties of a multi-layer film similar to the film of Example 7 in other respects.

A five-layer film laminate, prepared in accordance with Example 7 was coextruded to achieve an overall thicker film, again with a core thickness representing about 75 percent of the overall extruded thickness, with the thicknesses of the intermediate layers representing about 20 percent and the skin layers representing about 5 percent of the film thickness. The resultant multi-layer film exhibited the following properties.

| | |
|---|---|
| Optical gage | : 54μm |
| Polygage | : 38.5μm |
| Density | : 0.7 g/cc |
| Light transmission | : 0.2% |

The coefficient of friction of this film is also about 0.35 after a week of storage for migration.

As may be appreciated by those skilled in the art, the above examples illustrate: the value of graphite added to a white cavitated core to produce a high opacity film; the effect of the degree of cavitation on opacity and film appearance; that reduced cavitation improves films machinability in HFFS and VFFS packaging machines and improves film handling and reduces the damage due to handling; that reduced cavitation makes white opaque film less opaque and graphite pigmented opaque film darker and unpleasant in appearance; that the addition of $TiO_2$ will offset the darkening effect to preserve the good appearance of the film; that adding copolymer outer skins in a five layer structure will improve the sealability of the film when coated with acrylic on PvDC and the "soft" EP copolymer or terpolymer layer will reduce the core to skin layer delamination and also improve hot tack; adding migratory slip and antistatic agents in the intermediate layers will produce migration to the surface and reduce COF to a level on the order of 0.35.

**Claims**

1. An opaque, biaxially oriented, polymeric film structure which comprises at least three layers, there being:

    (a) a voided core layer comprising a matrix of (i) a thermoplastic polymeric material in which are dispersed (ii) void-initiating solid particles which are phase-distinct from the thermoplastic polymeric material of the matrix and about which particles are located opacifying voids;
    (b) a non-voided layer comprising a thermoplastic polymeric material, adherent to one side of the core layer (a), which comprises a migratory slip agent and a migratory antistatic agent;
    (c) a skin layer comprising a thermoplastic polymeric material and adherent to intermediate layer (b), the skin layer being thick enough to prevent the asperities of the core layer from being manifest.

2. A film structure according to claim 1 wherein the light transmission of the film is less than 10% and the degree of orientation is less than 10 TDO by less than 6 MDO.

3. A film structure according to claim 1 or 2 wherein the matrix (i) comprises a polyolefin.

4. A film structure according to claim 3 wherein the polyolefin comprises isotactic polypropylene.

5. A film structure according to any preceding claim wherein the void-initiating particles (ii) are substantially spherical.

6. A film structure according to any preceding claim wherein the void-initiating particles (ii) comprise polybutylene terephthalate.

7. A film structure according to any preceding claim wherein the core layer (a) comprises a light absorbing lamellar

---

* Measured after one week of aging to permit migration.

pigment.

8. A film structure according to any preceding claim wherein layer (b) comprises a polyolefin.

9. A film structure according to claim 8 wherein the polyolefin comprises isotactic polypropylene.

10. A film structure according to any preceding claim wherein layer (b) contains from 2 to 6 percent by weight of titanium dioxide.

11. A film structure according to any preceding claim wherein skin layer (c) comprises a polyolefin.

12. A film structure according to claim 11 wherein the polyolefin comprises a homopolymer of propylene; a linear low density polyethylene; a high density polyethylene; a random or block copolymer of propylene and ethylene; a terpolymer of ethylene, propylene and butene or a mixture thereof.

13. A film structure according to any preceding claim wherein the skin layer comprises a heat sealable material.

14. A film structure according to claim 11, 12 or 13 wherein the skin layer comprises a terpolymer of ethylene, propylene and 1-butene.

15. A film structure according to any preceding claim wherein the skin layer contains an antiblocking agent.

16. A film structure according to any preceding claim comprising layers (a), (b) and (c) and further comprising (b$^1$) a second non-voided layer comprising a thermoplastic polymeric material and adherent to the other side of the core layer (a) and containing up to 12 percent by weight of titanium dioxide.

17. A film structure according to any preceding claim and further comprising (c$^1$) a second non-voided skin layer comprising a thermoplastic polymeric material and adherent to intermediate layer (b$^1$), the skin layer being thick enough to prevent the asperities of the core layer from being manifest.

18. A film structure according to claim 17 wherein the skin layer (c$^1$) is free from titanium dioxide.

19. A film structure according to any of claims 16 to 18 wherein (b$^1$) or (c$^1$) can be as defined for (b) or (c), respectively, in any of claims 1 to 15.

**Patentansprüche**

1. Undurchsichtige, biaxial orientierte Polymerfilmstruktur, die mindestens drei Schichten aufweist, nämlich

   (a) eine mit Poren versehene Kernschicht, die eine Matrix aus (i) einem thermoplastischen polymeren Material aufweist, in dem (ii) Poren-initiierende feste Teilchen dispergiert sind, die von dem thermoplastischen polymeren Material der Matrix phasenverschieden sind und um die herum undurchsichtig machende Poren angeordnet sind,

   (b) eine nicht mit Poren versehene Schicht, die ein thermoplastisches polymeres Material enthält und an einer Seite der Kernschicht (a) haftet sowie ein Wandergleitmittel und ein Wanderantistatikmittel enthält und

   (c) eine Hautschicht, die ein thermoplastisches polymeres Material enthält und an der Zwischenschicht (b) haftet, wobei die Hautschicht dick genug ist, um ein Deutlichwerden der Unebenheiten der Kernschicht zu verhindern.

2. Filmstruktur nach Anspruch 1, worin die Lichtdurchlässigkeit des Films weniger als 10% und der Orientierungsgrad weniger als 10 TDO mal weniger als 6 MDO betragen.

3. Filmstruktur nach Anspruch 1 oder 2, worin die Matrix (i) ein Polyolefin enthält.

4. Filmstruktur nach Anspruch 3, worin das Polyolefin isotaktisches Polypropylen enthält.

5. Filmstruktur nach einem der vorstehenden Ansprüche, worin die Poren-initiierenden Teilchen (ii) im wesentlichen kugelförmig sind.

6. Filmstruktur nach einem der vorstehenden Ansprüche, worin die Poren-initiierenden Teilchen (ii) Polybutylenterephthalat enthalten.

7. Filmstruktur nach einem der vorstehenden Ansprüche, worin die Kernschicht (a) ein lichtabsorbierendes lamellares Pigment enthält.

8. Filmstruktur nach einem der vorstehenden Ansprüche, worin die Schicht (b) ein Polyolefin enthält.

9. Filmstruktur nach Anspruch 8, worin das Polyolefin ein isotaktisches Polypropylen enthält.

10. Filmstruktur nach einem der vorstehenden Ansprüche, worin die Schicht (b) 2 bis 6 Gew% Titandioxid enthält.

11. Filmstruktur nach einem der vorstehenden Ansprüche, worin die Hautschicht (c) ein Polyolefin enthält.

12. Filmstruktur nach Anspruch 11, worin das Polyolefin ein Homopolymer von Propylen, ein lineares Polyethylen mit niedriger Dichte, ein Polyethylen mit hoher Dichte, ein statistisches Copolymer oder Blockcopolymer aus Propylen und Ethylen, ein Terpolymer aus Ethylen, Propylen und Buten oder ein Gemisch aus solchen Stoffen enthält.

13. Filmstruktur nach einem der vorstehenden Ansprüche, worin die Hautschicht ein heißsiegelbares Material enthält.

14. Filmstruktur nach Anspruch 11, 12 oder 13, worin die Hautschicht ein Terpolymer aus Ethylen, Propylen und 1-Buten enthält.

15. Filmstruktur nach einem der vorstehenden Ansprüche, worin die Hautschicht ein Antiblockingmittel enthält.

16. Filmstruktur nach einem der vorstehenden Ansprüche, enthaltend die Schichten (a), (b) und (c) sowie ferner (b$^1$) eine zweite, nicht mit Poren versehene Schicht, die ein thermoplastisches polymeres Material aufweist und an der anderen Seite der Kernschicht (a) haftet sowie bis zu 12 Gew% Titandioxid enthält.

17. Filmstruktur nach einem der vorstehenden Ansprüche, enthaltend zusätzlich (c$^1$) eine zweite, nicht mit Poren versehene Hautschicht, die ein thermoplastisches polymeres Material aufweist und an der Zwischenschicht (b$^1$) haftet, wobei die Hautschicht dick genug ist, um ein Deutlichwerden der Unebenheiten der Kernschicht zu verhindern.

18. Filmstruktur nach Anspruch 17, worin die Hautschicht (c$^1$) frei von Titandioxid ist.

19. Filmstruktur nach einem der Ansprüche 16 bis 18, worin (b$^1$) oder (c$^1$) so sein können, wie es in einem der Ansprüche 1 bis 15 für (b) bzw. (c) definiert ist.

## Revendications

1. Une structure de film polymère opaque à orientation biaxiale qui comprend au moins trois couches, celles-ci étant :

   (a) une couche de coeur poreuse comprenant une matrice de (i) un matériau polymère thermoplastique dans lequel sont dispersées (ii) des particules porogènes dont la phase est distincte de celle du matériau polymère thermoplastique de la matrice, et autour desquelles particules sont situés des vides opacifiants ;
   (b) une couche non poreuse comprenant un matériau polymère thermoplastique, adhérant à un côté de la couche de coeur (a), qui comprend un agent de glissement migratoire et un agent antistatique migratoire ;
   (c) une couche de peau comprenant un matériau polymère thermoplastique et adhérant à la couche intermédiaire (b), la couche de peau étant suffisamment épaisse pour empêcher que les aspérités de la couche de coeur se manifestent.

2. Une structure de film selon la revendication 1, dans laquelle la transmission de la lumière du film est inférieure à 10 % et le degré d'orientation est de moins de 10 dans le sens travers par moins de 6 dans le sens machine.

3. Une structure de film selon la revendication 1 ou 2, dans laquelle la matrice (i) comprend une polyoléfine.

4. Une structure de film selon la revendication 3, dans laquelle la polyoléfine comprend du polypropylène isotactique.

5. Une structure de film selon l'une quelconque des revendications précédentes, dans laquelle les particules porogènes (ii) sont sensiblement sphériques.

6. Une structure de film selon l'une quelconque des revendications précédentes, dans laquelle les particules porogènes (ii) comprennent du poly(butylène téréphtalate).

7. Une structure de film selon l'une quelconque des revendications précédentes, dans laquelle la couche de coeur (a) comprend un pigment lamellaire absorbant la lumière.

8. Une structure de film selon l'une quelconque des revendications précédentes, dans laquelle la couche (b) comprend une polyoléfine.

9. Une structure de film selon la revendication 8, dans laquelle la polyoléfine comprend un polypropylène isotactique.

10. Une structure de film selon l'une quelconque des revendications précédentes, dans laquelle la couche (b) contient de 2 à 6 % en poids de dioxyde de titane.

11. Une structure de film selon l'une quelconque des revendications précédentes, dans laquelle la couche (c) comprend une polyoléfine.

12. Une structure de film selon la revendication 11, dans laquelle la polyoléfine comprend un homopolymère de propylène ; un polyéthylène basse densité linéaire ; un polyéthylène haute densité ; un copolymère statistique ou séquencé de propylène et d'éthylène ; un terpolymère d'éthylène, de propylène et de butène ; ou un de leurs mélanges.

13. Une structure de film selon l'une quelconque des revendications précédentes, dans laquelle la couche de peau comprend un matériau thermoscellable.

14. Une structure de film selon la revendication 11, 12 ou 13, dans laquelle la couche de peau comprend un terpolymère d'éthylène, de propylène et de 1-butène.

15. Une structure de film selon l'une quelconque des revendications précédentes, dans laquelle la couche de peau contient un agent anti-blocage.

16. Une structure de film selon l'une quelconque des revendications précédentes, comprenant les couches (a), (b) et (c), et comprenant en outre ($b^1$) une deuxième couche non poreuse comprenant un matériau polymère thermoplastique et adhérant à l'autre côté de la couche de coeur(a) et contenant jusqu'à 12 % en poids de dioxyde de titane.

17. Une structure de film selon l'une quelconque des revendications précédentes, et comprenant en outre ($c^1$) une deuxième couche de peau non poreuse comprenant un matériau polymère thermoplastique et adhérant à la couche intermédiaire ($b^1$), la couche de peau étant suffisamment épaisse pour empêcher que les aspérités de la couche de coeur se manifestent.

18. Une structure de film selon la revendication 17, dans laquelle la couche de peau ($c^1$) est exempte de dioxyde de titane.

19. e structure de film selon l'une quelconque des revendications 16 à 18, dans laquelle ($b^1$) ou ($c^1$) peut être respectivement telle que définie à propos de (b) ou (c) dans l'une quelconque des revendications 1 à 15.

EP 0 603 249 B1

Fig.1.

Fig.2.

14